# EUROPEAN PATENT APPLICATION

(11) **EP 1 439 327 A1**
(43) Date of publication of application: **21.07.2004**
(21) Application number: 03027259.5
(22) Date of filing: 28.11.2003
(51) Int. Cl.: F16H 37/04, F16H 3/091, F16H 3/083

(54) **Change gear for trucks**

(30) Priority: 14.01.2003 IT MI20030045
(71) Applicant: Capuano, Raffaele, 22072 Cermenate Co (IT)
(72) Inventor: Capuano, Raffaele, 22072 Cermenate Co (IT)
(74) Representative: Parisi, Luigi

(57) **Abstract**

A change gear for trucks is provided within the gearbox (10) with a primary shaft (12), an auxiliary shaft (16) and a secondary shaft (17), said primary shaft (12) being equipped with three first toothed wheels (13,14,15), designed to engage with the same number of toothed wheels (13',14',15') on the auxiliary shaft (16) for multiplying by three the number of gears, and the secondary shaft (17) being equipped with toothed wheels (18,19,20,21,22) that can couple with corresponding toothed wheels (18',19',20',21',22') on the auxiliary shaft (16), and the change gear having sleeves (23,24,25) for gear shifts, as well as an auxiliary sleeve (26) for multiplying gears and a sleeve (27) for reserve gear, the whole being managed by corresponding spindles (30,31,32,33) for gear shifts.

## Description

The present invention relates to a change gear for trucks.

As is known, truck change gears are universally used to simplify vehicle use, by selecting the gear that suits best the various conditions of use, for instance: start, cruising speed, bends, slopes, descents, etc.

It is known about several types of change gears, provided with several gears and one or two reverse gears, which enable to vary the driving ratio between the truck engine and the drive, depending on which particular gear is selected.

Normally, the clutch is released so as to enable to select the pair of particular gears to be used, and when the pair of gears has been selected, a mechanism synchronizes the rotation of the revolving elements that are active during said operation, and when synchronization is achieved, the pair of gears chosen for said operation is engaged.

Once this has been carried out, engine and drive are again engaged, so that rotation and torque are transmitted through the drive to the output.

Notwithstanding the above, there is the need for an improvement of the performances of truck change gears currently in use.

An aim of the present invention, therefore, is to solve the aforesaid problem, by carrying out a change gear for trucks that offers improved performances as far as flexibility and versatility of use are concerned.

A further aim of the present invention is to carry out a change gear for trucks that offers a convenient number of forward and reverse gears.

Said aims are achieved according to the present invention by a change gear for trucks as in claim 1, to which reference is made for reasons of shortness.

The invention will hereinafter be described in detail by way of non-limiting example, with reference to the accompanying drawings, in which:

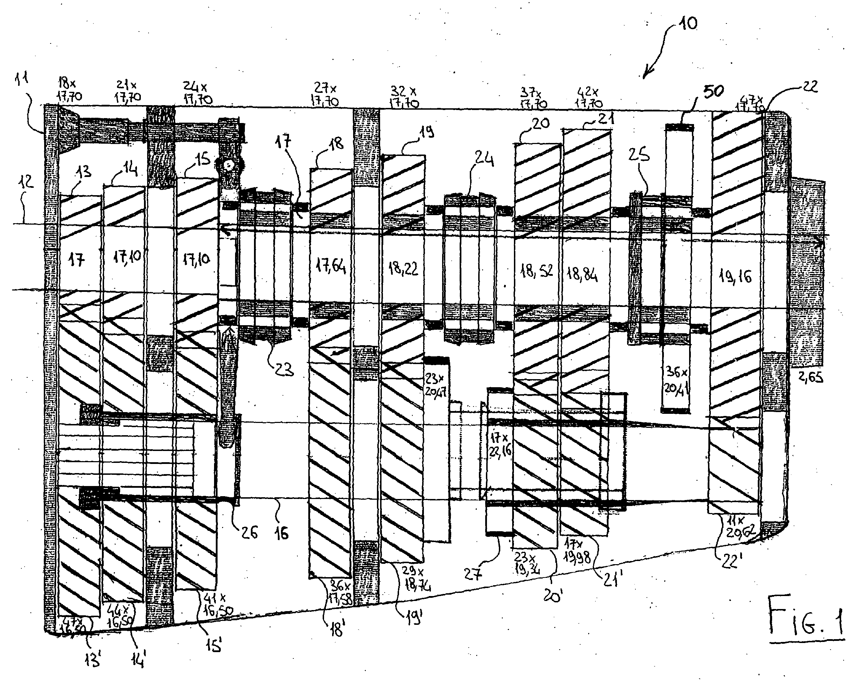

Figure 1 is a sectioned view of the change gear for trucks according to the present invention; and
Figure 2 is a top view of the inside of the change gear for trucks according to the present invention.

The change gear for trucks according to the present invention is globally referred to with number 10 in the figures.

The primary shaft 12 provided with the toothed wheels 13, 14, 15 gets into the gearbox 11, which wheels are designed to engage with the toothed wheels 13', 14' e 15' of the auxiliary shaft 16.

The toothed wheels 13-15 of the primary shaft 12 are stationary.

The change gear 10 is also equipped with the secondary shaft 17 provided with the toothed wheels 18, 19, 20, 21 and 22. Said toothed wheels can couple with corresponding toothed wheels 18', 19', 20', 21' e 22', which are placed on the auxiliary shaft 16.

The toothed wheels 18-22 of the secondary shaft 17 are movable. The toothed wheels 13'-15' of the auxiliary shaft 16 are movable, whereas the toothed wheels 18'-22' of the auxiliary shaft 16 are stationary.

The change gear 10 also has front-tooth sleeves 23, 24 and 25 for gear shifts, as well as the sleeve 26 for gearing up and the sleeve 27 for reverse gear. The toothed wheel 50 for reverse gear is also visible.

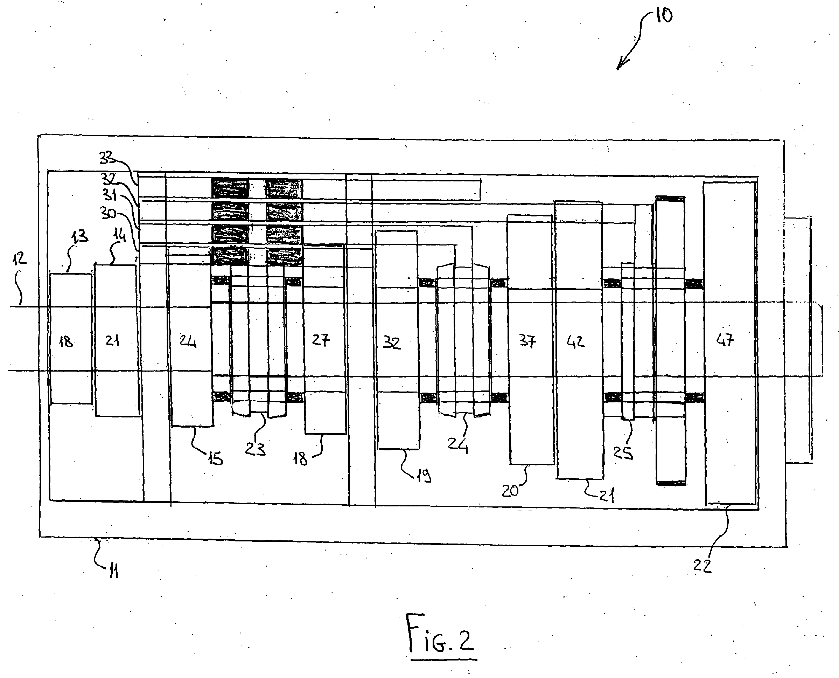

Figure 2 also shows the spindles 30, 31, 32 and 33 for gear changes.

Considering now the various toothed wheels, we can see that: the toothed wheel 13 has 18 teeth with a pitch of 17.70, whereas the toothed wheel 13' has 47 teeth with a pitch of 16.50. The total number of teeth of both wheels is 65.

Exactly in the same way, the toothed wheel 14 has 21 teeth, with a pitch of 17.70, whereas the toothed wheel 14' has 44 teeth with a pitch of 16.50. The total number of teeth is 65.

Going on, the toothed wheel 15 has 24 teeth, with a pitch of 17.70, whereas the toothed wheel 15' has 41 teeth with a pitch of 16.50. The total number of teeth is 65.

The toothed wheel 18 has 27 teeth, with a pitch of 17.70, whereas the toothed wheel 18' has 36 teeth with a pitch of 17.58.

The toothed wheel 19 has 32 teeth, with a pitch of 17.70, whereas the toothed wheel 19' has 29 teeth with a pitch of 18.74.

The toothed wheel 20 has 37 teeth, with a pitch of 17.70, whereas the toothed wheel 20' has 23 teeth with a pitch of 19.34.

The toothed wheel 21 has 42 teeth, with a pitch of 17.70, whereas the toothed wheel 21' has 17 teeth with a pitch of 19.98, eventually the toothed wheel 22 has 47 teeth, with a pitch of 17.70, whereas the toothed wheel 22' has 11 teeth with a pitch of 20.62.

The sleeve 27 for reverse gear has on one side 23 teeth with a pitch of 20.47 and on the other side 13 teeth with a pitch of 22.46.

In Figure 2, in the middle of the drawing there is also the indication of the number of teeth of the single toothed wheels.

During the operation of the change gear 10 according to the present invention, the shift of the sleeve 25 enables to change from the first into the second gear, the shift of the sleeve 24 enables to change from the third into the fourth gear, and the shift of the sleeve 23 enables to change from the fifth into the sixth gear.

Gear shifts are managed by means of corresponding spindles 30-33.

The shift of the sleeve 25 takes place by means of the spindle 32, the shift of the sleeve 24 takes place by means of the spindle 31, and the shift of the sleeve 23 takes place by means of the spindle 30.

Thanks to the sleeve 26 the aforesaid gears can be multiplied by three, thus achieving a total of 18 gears. As a matter of fact, it shifts the toothed wheels 13'-15' of the auxiliary shaft 16.

Moreover, by exploiting the sleeve 27 in its various positions, up to three reverse gears can be achieved.

As previously outlined, the following ratios are achieved for reverse gear: 13 - 11 - 9; for first gear: 14 - 12 - 10; for second gear: 25 - 22 - 19; for third gear: 38 - 34 - 30; for fourth gear: 56 - 49 - 43; for fifth gear: 83 - 73 - 63; for sixth gear: 120 - 106 - 92.

As can be inferred from the preceding description, the change gear according to the present invention, thanks to the characteristics disclosed before, has higher possibilities and versatilities of use, thus also improving truck driving.

The present invention can undergo several changes and variants, all of which fall within the inventive idea disclosed in the appended claims, whereas technical details can vary on an as-needed basis.

In particular, the change gear for trucks according to the present invention can be equipped, beyond with a primary, an auxiliary and a secondary shaft, with a smaller number of wheels movable on said secondary shaft, which can couple with corresponding stationary toothed wheels on the aforesaid auxiliary shaft, so as to achieve smaller versions of the aforesaid change gear, i.e. versions with a smaller number of gears.

This results in particularly small-sized change gears for trucks, having 15, 12 and 9 gears, respectively.

## Claims

1. Change gear for trucks, **characterized in that** it is provided within the gearbox with a primary shaft, an auxiliary shaft and a secondary shaft, said primary shaft being equipped with at least three first toothed wheels, designed to engage with the same number of toothed wheels on the auxiliary shaft for multiplying by three the number of gears, and the aforesaid secondary shaft being equipped with toothed wheels that can couple with corresponding toothed wheels on the auxiliary shaft, and the aforesaid change gear having sleeves for gear shifts, as well as a sleeve for multiplying gears and a sleeve for reverse gear, the whole being managed by corresponding spindles for gear shifts.

2. Change gear for trucks according to claim 1, **characterized in that** for each toothed wheel it is provided for a corresponding toothed wheel that can be coupled to the first one, the aforesaid wheels having a suitable pitch, so that the total number of teeth of the two wheels is constant.

3. Change gear for trucks according to one or more of the preceding claims, **characterized in that** it has a toothed wheel with 18 teeth, having a pitch of 17.70, which can be coupled with a toothed wheel with 47 teeth having a pitch of 16.65.

4. Change gear for trucks according to one or more of the preceding claims, **characterized in that** it has a toothed wheel with 21 teeth, having a pitch of 17.70, which can be coupled with a toothed wheel with 44 teeth having a pitch of 16.45.

5. Change gear for trucks according to one or more of the preceding claims, **characterized in that** it has a toothed wheel with 23 teeth, having a pitch of 17.60, which can be coupled with a toothed wheel with 41 teeth having a pitch of 16.40.

6. Change gear for trucks according to one or more of the preceding claims, **characterized in that** it has a toothed wheel with 27 teeth, having a pitch of 17.70, which can be coupled with a toothed wheel with 36 teeth having a pitch of 17.58.

7. Change gear for trucks according to one or more of the preceding claims, **characterized in that** it has a toothed wheel with 32 teeth, having a pitch of 17.70, which can be coupled with a toothed wheel with 29 teeth having a pitch of 18.74.

8. Change gear for trucks according to one or more of the preceding claims, **characterized in that** it has a toothed wheel with 37 teeth, having a pitch of 17.70, which can be coupled with a toothed wheel with 23 teeth having a pitch of 19.34.

9. Change gear for trucks according to one or more of the preceding claims, **characterized in that** it has a toothed wheel with 42 teeth, having a pitch of 17.70, which can be coupled with a toothed wheel with 17 teeth having a pitch of 19.98.

10. Change gear for trucks according to one or more of the preceding claims, **characterized in that** it has a toothed wheel with 47 teeth, having a pitch of 17.70, which can be coupled with a toothed wheel with 11 teeth having a pitch of 20.64.

11. Change gear for trucks according to the preceding claims, **characterized in that** the aforesaid sleeve for reverse gear has on one side 23 teeth with a pitch of 20.47 and on the other side 13 teeth with a pitch of 22.46.

12. Change gear for trucks according to the preceding claims, **characterized in that**, during operation, the shift of a sleeve enables to change from the first into the second gear, the shift of a second sleeve enables to change from the third into the fourth gear, and the shift of a third sleeve enables to change from the fifth into the sixth gear.

13. Change gear for trucks according to the preceding claims, **characterized in that** thanks to the auxiliary sleeve the aforesaid gears can be multiplied by three.

14. Change gear for trucks according to the preceding claims, **characterized in that** by exploiting the reverse gear sleeve in its various positions, up to three reverse gears can be achieved.

15. Change gear for trucks according to the preceding claims, **characterized in that** it enables to achieve the following ratios for reverse gear: 13 - 11 - 9; for first gear: 14 - 12 - 10; for second gear: 25 - 22 - 19; for third gear: 38 - 34 - 30; for fourth gear: 56 - 49 - 43; for fifth gear: 83 - 73 - 63; for sixth gear: 120 - 106 - 92.
